Europäisches Patentamt

European Patent Office

Office européen des brevets

(19)

(11) Publication number: **0 385 618**

**A1**

(12) **EUROPEAN PATENT APPLICATION**

(21) Application number: **90301662.4**

(22) Date of filing: **15.02.90**

(51) Int. Cl.⁵ **B60G 17/04**

(30) Priority: **01.03.89 GB 8904608**

(43) Date of publication of application:
**05.09.90 Bulletin 90/36**

(84) Designated Contracting States:
**DE FR GB IT SE**

(71) Applicant: **LUCAS INDUSTRIES public limited company**
**Great King Street**
**Birmingham, B19 2XF West Midlands(GB)**

(72) Inventor: **Appleyard, Michael**
**31 Judeland**
**Chorley, Lancashire, PR7 1XJ(GB)**

(74) Representative: **Makovski, Priscilla Mary et al**
**BARKER, BRETTELL & DUNCAN 138 Hagley Road**
**Edgbaston Birmingham B16 9PW(GB)**

(54) Vehicle suspension systems.

(57) In a vehicle suspension system the load of a vehicle body (3) on each vehicle wheel (2) is supported by suspension means including a gas spring (4) having fluid-pressure-operated adjuster means (8) for adjusting the height of the vehicle body (3) relative to the wheel (2), and damper means (7) for the spring (4), the system also having a source of fluid pressure (9) for operating the adjuster means (8) and a fluid reservoir (11). In order to enable the system to compensate for dynamic load variation as well as static load variation, but without requiring too much power, each gas spring (4) is connected into a static load compensation circuit having a volume (16) pressurised from the fluid pressure source (9) to support the static load on the wheel, and displacement means (12) operated by the source (9) are provided to displace fluid in the adjuster (8) to compensate for dynamic load variations, the compensation volume (16) being isolated from the source (9) at least while dynamic load compensation is happening.

# VEHICLE SUSPENSION SYSTEMS

This invention relates to vehicle suspension systems of the kind in which the load of a vehicle body on each vehicle wheel is supported by suspension means including a gas spring having fluid-pressure-operated adjuster means for adjusting the height of the vehicle body relative to the wheel, and damper means for the spring, the system also including a source of fluid pressure for operating the adjuster means, and a reservoir for fluid.

Suspension systems of the kind set forth may be oleo-pneumatic, in which case the gas spring is a gas/hydraulic spring, having a sealed volume of gas acted on by a variable volume of hydraulic fluid, which is connected through the damper means to a fluid displacement unit, mounted between the body and the wheel, and comprising the adjuster means. Alternatively, the system may be pneumatic, where the gas spring comprises an air spring connected between the body and the wheel and having a variable air volume which also acts as the adjuster means, and the damper means comprises a separate hydraulic damper connected between the body and the wheel. In each system the fluid pressure source comprises a pump, and adjustment is made only to compensate for variations in the static load of the vehicle, by pumping fluid into or out of the adjuster means. When the vehicle is being driven, manoeuvres such as cornering and braking, and road conditions will also affect the attitude of the vehicle body, and so it is also desirable for the suspension system to be able to compensate for these dynamic load variations as well, in order to improve vehicle ride and handling. With appropriate sensors this is feasible, but if the system is to compensate for most or all of the dynamic load variations, the pump has to operate virtually all the time. As it is providing not only the energy to compensate for the relatively small dynamic load variations, but also the energy to support the load, it takes a significant amount of power, which is undesirable. Another known suspension system which compensates for dynamic load variations does not use a gas spring, but instead has a steel spring and a double-acting hydraulic ram connected in parallel between the body and the wheel. The spring takes most of the static load on the body, and the actuator is operated simply to adjust the height of the body, and so does not take much power. However, it is not desirable to include a similar steel spring in a suspension system of the kind set forth, firstly as it creates problems with the design of the gas spring if it is allowed to support most of the static load and secondly as it requires extra space in the vicinity of the wheel, and this is often difficult to find.

According to the present invention, in a suspension system of the kind set forth each gas spring is connected into a static load compensation circuit having a compensation fluid volume adapted to be pressurised from the fluid pressure source to support the static load on the wheel, the system also including displacement means operated from the fluid pressure source to displace fluid in the adjuster means to compensate for dynamic load variations on the wheel, and means for isolating the compensation volume from the fluid pressure source at least while the displacement means is operating to compensate for dynamic load variations.

Thus, the power taken by the fluid pressure source to operate the displacement means for dynamic load compensation is relatively small, as the static load is supported by the compensation fluid volume which is isolated from the source. This advantage is achieved without the use of an extra steel spring so the design of the gas spring is not affected, and although the fluid volume requires extra space, this need not be near the wheel.

Preferably, the adjuster means for each gas spring is connected into the load compensation circuit. This circuit conveniently includes a balancing piston, with the fluid in the adjuster means and the compensation fluid volume acting on opposite sides of the piston. The displacement means may also comprise a piston, and conveniently fluid from the source is able to act on opposite sides of this piston. Preferably, the two pistons are connected in tandem to form a single load compensation piston.

Appropriate flow control valves are provided to control communication between the fluid pressure source or the reservoir and the various components. A three-way valve is provided for each adjuster means and each compensation fluid volume, and a four-way valve for the opposite sides of the displacement piston. Conveniently a single compensation fluid volume, and appropriate valve, is provided for a vehicle, although pairs or sets of wheels may have separate compensation fluid volumes and appropriate valves. Preferably, each wheel has its own adjuster means, load compensation piston and appropriate valves.

The valves are preferably solenoid-operated, and are controlled by an electronic control unit in accordance with signals from various sensors. The types of sensors used will depend on the load variations which are to be compensated for, but will typically include sensors for measuring the height of the body, the pressures in the gas springs, fluid flow into and out of the adjuster means, as well as vehicle speed, acceleration, and brake pressure. It should be noted that the movement of the displacement pistons can be used to provide an accurate measurement of the fluid flow.

The suspension means may comprise a gas hydraulic spring, having a sealed gas volume providing the spring medium, and a variable hydraulic volume connected through damper means to the adjustment means in the form of an hydraulic displacer unit connected between the wheel and the body. The fluid pressure source may then comprise a variable displacement pump, which operates as required. Alternatively, a fixed displacement pump may be provided, with an accumulator and unloader valve.

Alternatively the suspension means may comprise an air spring connected between the wheel and the body, and having a variable air volume providing the adjuster means and connected into the load compensation circuit, together with an hydraulic damper connected between the wheel and the body. The fluid pressure source then comprises a suitable air pump.

When the system is inoperative, the pump is inoperative, but residual pressures remain in the gas springs, the adjuster means and the compensation fluid volume. On initial operation the load compensation pistons are centralised by operating the double-acting valves to centralise the displacement pistons, which are then held in position hydraulically. Fluid can then be pumped into or out of the adjuster means until the body is at the correct height. The pressures in the gas springs are then measured, and the pressure of the compensation fluid volume is adjusted so that it supports the average static load on the gas springs, through the balancing piston, thus removing most of the static loads from the displacement means. When the vehicle is in motion, the displacement pistons are operated by the double-acting valves, to cause displacement of fluid into and out of the adjuster means in accordance with the dynamic load variations.

The system therefore provides an efficient way of compensating for both static and dynamic load variations, without being too complex or consuming too much power.

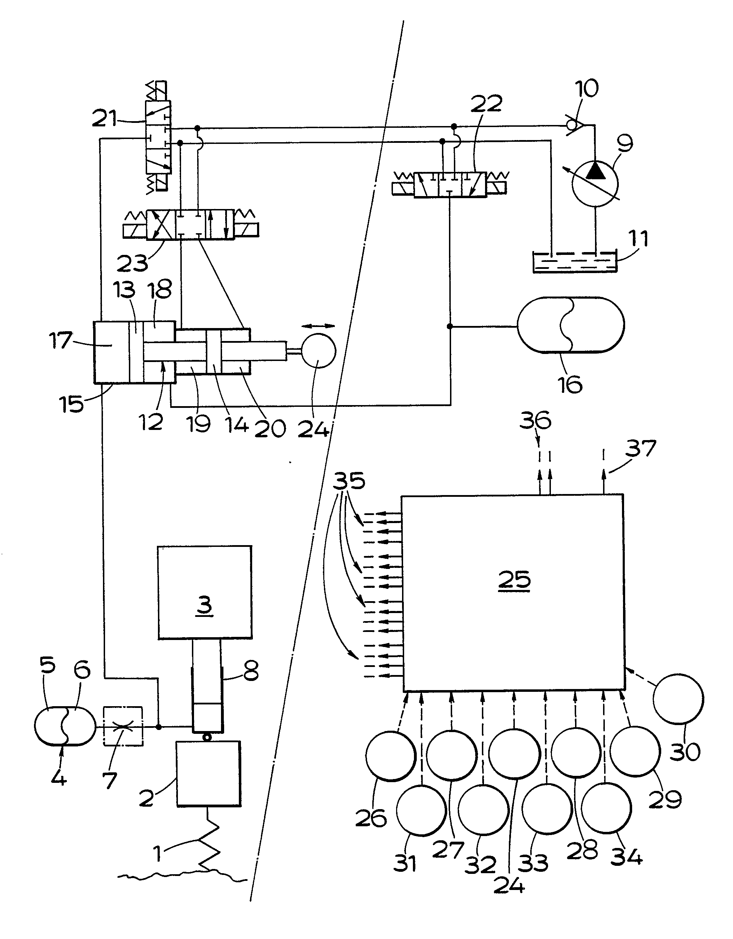

An embodiment of our invention is illustrated in the accompanying drawings, of which the single figure shows, schematically, a vehicle suspension system.

The suspension system shown in the figure is for a four-wheeled vehicle such as a passenger car, and is shown in quarter-car form, so that there are in fact four of each of the components on the left-hand side of the chain-dotted line, but only one of the remaining components, except where indicated. In the system the tyres 1 are represented by springs, and the wheels and body as unsprung and sprung masses 2,3 respectively.

In the system the load of the vehicle body 3 on each wheel 2 is supported by a gas/hydraulic spring 4 having a sealed gas volume 5 providing the spring medium, and a variable hydraulic volume 6 connected through damper means 7 to adjuster means in the form of an hydraulic displacer unit 8 connected between the wheel 2 and the body 3. A variable displacement pump 9, with the usual one-way valve 10, provides a source of fluid pressure which, together with a fluid reservoir 11, enables the displacer unit 8 to be operated to adjust the height of the body 3 relative to the wheels 2, in order to compensate for load variations on the vehicle.

Each displacer unit 8 is connected into a static load compensation circuit having a load compensating piston 12 comprising a balancing piston 13 and a displacement piston 14 working in tandem in a housing 15, and a compensation volume 16 of hydraulic fluid, which is part of each load compensation circuit.

Each housing 15 has four chambers, with opposite sides of the balancing piston 13 responsive to pressures in balancing chambers 17,18, and opposite sides of the displacement piston 14 responsive to pressures in displacement chambers 19,20. The balancing chamber 17 is connected to the displacer unit 8, and to the pump 9 and reservoir 11 through a three-way control valve 21. The balancing chamber 18 is connected to the compensation volume 16, which is in turn connected to the pump 9 and reservoir 11 by a three-way compensation control valve 22. Pressure in the volume 16 can therefore act through the balancing piston 13 in order to support the load in the gas/hydraulic spring 4. The displacement chambers 19,20 are connected to the pump 9 and reservoir 11 through a four-way control valve 23, and movement of the displacement piston 14 by fluid flow into and out of the chambers 19,20 acts via the balancing piston 13 to displace fluid into and out of the displacer unit 8. A sensor 24 measures the movement of the piston 14, as this gives an accurate measurement of the fluid flow into and out of the unit 8.

The control valves 21, 22 and 23 are solenoid-operated, and are controlled by an electronic control unit 25, which operates the valves, in accordance with the input from various sensors, to adjust the body height as required. The sensors are not shown in detail, but the number and type provided enables the system to compensate for static load variations, and dynamic load variations on the vehicle due to cornering, braking, acceleration, and road conditions. There are four sensors 26, each measuring the height of the body 3 relative to a wheel 2, and four sensors 27, each measuring the pressure in a spring 4. These enable the system to compensate for static load variations, while the remaining sensors are for dynamic load variation compensation. These comprise the four flow sensors 24, four sensors 28 measuring the acceleration of the body 2, a sensor 29 measuring the lateral acceleration of the vehicle's centre of gravity, a brake pressure sensor 30, a steering angle sensor 31, a road speed sensor 32, a yaw rate sensor 33 and a throttle sensor 34. The unit 25 has four sets of outputs 35 for the four pairs of valves 21,23, and outputs 36 for the compensation valve 22. It also has an output 37 for an engine management system (not shown) of the vehicle, which ensures that the engine compensates for operation of the pump 9 at light throttle openings, so that the power loss is not perceived by the driver of the vehicle.

When the system is inoperative, the pump 9 is inoperative, but all the hydraulic fluid components are isolated, so that they are at indeterminate residual pressures, as a result of load changes and leakage. When the vehicle is to be used, the pump 9 and the control valves 23 are operated first in order to centralise all the pistons 14, and hence the pistons 12. The position of each piston 14 is indicated by its sensor 24. Once centralised, the control valves 23 are closed to hold the pistons 14 in position hydraulically. The height of the body 3 relative to the wheels 2 is then measured by the sensors 26, and fluid is pumped into, or released from the displacer units 8 through the control valve 21 to adjust the height of the body. It will be noted that this displacement of fluid does not affect the pistons 12, as each is still held in its central position. The electronic control unit 25 then measures the pressures in the springs 4 by means of the sensors 27, and calculates the pressure required in the compensation volume 16 to support these pressures. The pump 9 and compensation valve 22 are operated to pressurise the volume 16 accordingly. At this point therefore, the load on the springs 4 is supported by the pressure in the compensation volume 16 acting through the balancing pistons 13, but the net forces acting on the pistons 12 are very small, as they are balanced.

When the vehicle is in motion, the height of the body 3 moves relative to the wheels 2, as the vehicle is cornered, braked or accelerated, and as the road conditions change. The changes in body height are monitored by the sensors, and the control unit 25 compensates for them by operating the control valves 23 to displace fluid in the chambers 19,20, to move the pistons 14, and hence the pistons 13, to displace fluid into and out of the displacer units 8 as required to maintain the attitude of the body.

The amount of fluid displacement in the units 8 is generally small, and the hydraulic energy required to operate the pistons 14 to accomplish this is not great, as the load on the springs 4 is supported by the compensation volume 16, and the net forces on the pistons 12 are small. The compensation volume 16 is sufficiently large to ensure that the variations in the position of the pistons 12 do not affect the pressure in the balancing chambers 18 significantly. Because they operate as double-ended actuators, the pistons 14 can be operated rapidly, and the valves 23 must be capable of regulating the fluid flow in chambers 19,20 accurately in order to ensure that the system operates properly. The control valves 21,22 do not require such accuracy, as they are only operated during static load compensation.

The system is able to operate efficiently, even though it may be compensating for dynamic load variations all the time that the vehicle is in motion, as the amount of hydraulic energy required for such compensation is relatively small. The amount of power used is also minimised by the use of the variable displacement pump 9.

In a modification, not shown, the pump 9 may be replaced by a fixed displacement pump, with an accumulator and unloader valve.

In a further modification (not shown) the system may not be required to compensate for all dynamic load variations. For example, compensation for differing road conditions may not be required. In this case, fewer sensors are provided, and the logic of the control unit 25 is altered accordingly.

In yet another modification (not shown) the system is pneumatic, with each gas/hydraulic spring 4, damper 7 and displacer unit 8 replaced by an air spring and an hydraulic damper, both of which are connected between the body 3 and the wheel 2, with the air spring having a variable air volume acting as the adjuster means. The variable air volume is then connected into the balancing chamber 17 of the load compensation circuit. A suitable air pump and drier are provided instead of the pump 9 and reservoir 11, but the remaining parts of the system are similar to those in the hydraulic version, and the operation of the system will be similar.

In yet another modification (not shown), separate compensation volumes 16 and valves 22 are provided for the front and rear pairs of springs to provide more accurate static load compensation, when the distribution of the load between the front and rear of the vehicle is uneven.

## Claims

1. A vehicle suspension system in which the load of a vehicle body (3) on each vehicle wheel (2) is supported by suspension means including a gas spring (4) having fluid-pressure-operated adjuster means (8) for adjusting the height of the vehicle body (3) relative to the wheel (2), and damper means (7) for the spring (4), the system including a source of fluid pressure (9) for operating the adjuster means (8), and a reservoir (11) for fluid, characterised in that each gas spring (4) is connected into a static load compensation circuit having a compensation fluid volume (16) adapted to be pressurised from the fluid pressure source (9) to support the static load on the wheel (2), and the system includes displacement means (14) operated from the fluid pressure source (9) to displace fluid in the adjuster means (8) to compensate for dynamic load variations on the wheel (2), and means (22) for isolating the compensation volume (16) from the fluid pressure source (9) at least while the displacement means (14) is operating to compensate for dynamic load variations.

2. A vehicle suspension system according to Claim 1, in which the adjuster means (8) for each gas spring (4) is connected into the load compensation circuit.

3. A vehicle suspension system according to Claim 1 or Claim 2, in which the load compensation circuit includes a balancing piston (13), with fluid in the adjuster means (8) and the compensation fluid volume (16) acting on opposite sides of the piston (13).

4. A vehicle suspension system according to any preceding claim, in which the displacement means comprises a piston (14), fluid from the source (9) acting on opposite sides of the piston (14).

5. A vehicle suspension system according to Claim 3 and Claim 4, in which the balancing piston (13) and displacement piston (14) are connected in tandem to form a single load compensation piston (12).

6. A vehicle suspension system according to any preceding claim, in which the vehicle has a single fluid compensation volume (16), with a flow control valve (22) controlling communication between the volume (16) and the fluid pressure source (9) or the reservoir (11).

7. A vehicle suspension system according to any of Claims 1 to 5, in which sets of one or more vehicle wheels (2) have separate fluid compensation volumes (16), with a respective flow control valve (22) controlling communication between each volume (16) and the fluid pressure source (9) or the reservoir (11).

8. A vehicle suspension system according to Claim 5, in which each vehicle wheel (2) has its own adjuster means (8) and load compensation piston (12), with a flow control valve (21) controlling communication between the adjuster means (8) and the fluid pressure source (9) or the reservoir (11), and a flow control valve (23) controlling communication between opposite sides of the displacement piston (14) and the fluid pressure source (9) or the reservoir (11).

9. A vehicle suspension system according to Claim 8, in which the flow control valves (21,22,23) are solenoid-operated, and controlled by an electronic control unit (25) in accordance with signals from sensors measuring static and dynamic load variations on the vehicle.

10. A vehicle suspension system as claimed in any preceding claim, in which the suspension means comprises a gas/hydraulic spring (4) having a sealed gas volume (5) providing the spring medium, and a variable hydraulic volume (6) connected through damper means (7) to adjuster means which comprises an hydraulic displacer unit (8) connected between the wheel (2) and the body (3).

11. A vehicle suspension system as claimed in any of Claims 1 to 9, in which the suspension means comprises an air spring connected between the wheel (2) and the body (3), and a variable air volume providing the adjuster means and connected into the load compensation circuit, together with an hydraulic damper connected between the wheel (2) and the body (3).

# EUROPEAN SEARCH REPORT

**European Patent Office**

**Application Number**

EP 90 30 1662

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2199618 (GENERAL MOTORS CORP) * page 2, line 5 - page 3, line 25; figures 1, 3 * | 1-4, 10 | B60G17/04 |
| A | * page 7, lines 1 - 30 * | 9 | |
| Y | PATENT ABSTRACTS OF JAPAN vol. 12, no. 52 (M-668)(2899) 17 February 1988, & JP-A-62 198508 (FUJI HEAVY IND LTD) 02 September 1987, * the whole document * | 1-4, 10 | |
| A | | 6, 7 | |
| A | EP-A-190944 (GROUP LOTUS PLC) * page 2, line 17 - page 3, line 34; claims 1, 2, 6, 7 * | 1, 2, 4, 8-11 | |
| A | US-A-3036844 (A.E.VOGEL) * column 5, lines 46 - 67; figures 5-7 * * column 7, lines 26 - 60 * * column 10, line 66 - column 11, line 5 * | 1, 5, 10, 11 | |
| A | US-A-3227466 (G.GARCEA ET AL.) * column 1, lines 12 - 37; figure * * column 2, lines 15 - 20 * | 1, 10 | TECHNICAL FIELDS SEARCHED (Int. Cl.5) <br><br> B60G |
| A | US-A-4030777 (VOLKSWAGEN AG) | | |

The present search report has been drawn up for all claims

| Place of search | Date of completion of the search | Examiner |
|---|---|---|
| THE HAGUE | 07 JUNE 1990 | PEMBERTON P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)